Europäisches Patentamt

European Patent Office

Office européen des brevets

(11) Veröffentlichungsnummer: **0 375 877**
**A2**

(12) **EUROPÄISCHE PATENTANMELDUNG**

(21) Anmeldenummer: **89119897.0**

(22) Anmeldetag: **26.10.89**

(51) Int. Cl.5: **A22C 17/04**

(30) Priorität: **30.12.88 DE 3844302**

(43) Veröffentlichungstag der Anmeldung:
**04.07.90 Patentblatt 90/27**

(84) Benannte Vertragsstaaten:
**DE GB NL**

(71) Anmelder: **MODERNPACK BERNARDS-HOPPE GMBH**
**Zum Kreuzbusch 3**
**D-5060 Bergisch Gladbach 4(DE)**

(72) Erfinder: **Hoppe, Günther**
**Zum Kreuzbusch 3**
**D-5060 Bergisch Gladbach 4(DE)**

(74) Vertreter: **Patentanwälte Dipl.-Ing. W. Dahlke**
**Dipl.-Ing. H.-J. Lippert**
**Frankenforster Strasse 137**
**D-5060 Bergisch Gladbach 1(DE)**

(54) **Trennmaschine.**

(57) Eine Trennmaschine zur Trennung von Produkten weicher und härterer Konsistenz besteht im wesentlichen aus einer Trommel (8) mit Öffnungen in der Umfangswand, mit einer unter Druck gegen die Trommel (8) anliegenden elastischen Schicht (9), die simultan und in dem Bereich (13), in dem die Schicht (9) an der Trommel (8) anliegt, in gleicher Richtung mit dieser bewegbar ist und die mit der Trommel (8) an der der Bewegungsrichtung entgegengesetzten Seite einen im Schnitt annähernd dreiecksförmigen Zwischenraum (15) bildet, und einer Zuführungsvorrichtung (2) zur Zuführung der Produkte in den Zwischenraum (15). Um die Produkte sicher in den Spalt zwischen Trommel (8) und elastischer Schicht (9) zu befördern, ist ein Schieber (6) vorgesehen, der periodisch in den Zwischenraum (15) hinein- und aus diesem herausbewegbar ist und der durch einen Antriebsmechanismus (7) angetrieben wird.

Fig. 1

## Trennmaschine

Die Erfindung betrifft eine Trennmaschine zur Trennung von Produkten weicher und härterer Konsistenz, mit einer zylinderförmigen Trommel die in ihrer Umfangswand Öffnungen zum Hindurchtreten des oder der Produkte weicher Konsistenz aufweist und die um ihre Achse drehbar antreibbar ist, mit einer seitlich und/oder unterhalb der Trommel angeordneten und unter Druck gegen die Trommel anliegenden elastischen Schicht, die simultan und in dem Bereich, in dem die Schicht an der Trommel anliegt, in gleicher Richtung mit dieser bewegbar ist und die mit der Trommel an der der Bewegungsrichtung entgegengesetzten Seite einen im Schnitt annähernd dreieckförmigen Zwischenraum bildet, und mit einer Zuführungsvorrichtung zur Zuführung der Produkte in den Zwischenraum.

Derartige Maschinen sollen in der lebensmittelverarbeitenden Industrie z. B. zur Trennung von Fischfleisch von Gräten und Haut, Fleisch von Sehnen und Knochenteilchen und Knorpelknochen und andere Lebensmittel wie Wurst, Käse, Butter, Margarine, Fette, Milch, Soßen, Obst und Eiscreme vom Verpackungsmaterial und härteren Bestandteilen verwendet werden. Dabei wird das Ausgangsprodukt über die Zuführungsvorrichtung dem Zwischenraum zwischen Trommel und elastischer Schicht zugeführt. In dem sich in Bewegungsrichtung der Trommel und der elastischen oder Aluminium-Folien verpackte Käseecken oder in Papier oder Pappe verpackter Eiscreme, in den sich verjüngenden Spalt zwischen Trommel und elastischer Schicht zu gelangen.

Der Erfindung liegt die Aufgabe zugrunde, eine Trennmaschine der obigen Art zu schaffen, bei der die Produkte sicher in den Spalt zwischen Trommel und elastischer Schicht befördert und in diesem sicher verarbeitet werden.

Die Aufgabe wird erfindungsgemäß dadurch gelöst, daß ein Schieber, der periodisch in den Zwischenraum zwischen Trommel und elastischer Schicht hinein und auf diesem herausbewegbar ist, und ein Antriebsmechanismus zur periodischen Bewegung des Schiebers vorgesehen sind.

Aufgrund des periodisch in den Zwischenraum zwischen Trommel und elastischer Schicht hinein und aus diesem herausbewegbarem Schieber werden den zu verarbeitenden Produkten Stöße in Richtung auf den Spalt zwischen Trommel und elastischer Schicht erteilt. Diese Stöße genügen, um die Produkte so weit in den Spalt zwischen Trommel und elastischer Schicht zu schieben, daß sie von der gleichgerichteten Bewegung der Trommel und der elastischen Schicht erfaßt und zwischen diese gepreßt werden. Damit ist eine sichere Verarbeitung der Produkte gewährleistet.

Vorzugsweise ist die Bewegungsrichtung des Schiebers so angeordnet, daß sie etwa mittig durch den im Schnitt annähernd dreieckförmigen Zwischenraum verläuft. Der Schieber ist dann ziemlich genau auf den Spalt zwischen Trommel und elastischer Schicht hin gerichtet und schiebt die zu verarbeitenden Produkte genau zum Spalt hin.

In einer bevorzugten Ausführung ist der Schieber in Form Schicht verjüngenden Zwischenraum wird das Produkt zusammengedrückt und einem immer stärker werdenden Druck zwischen der Trommel und der elastischen Schicht ausgesetzt. Dabei werden die Produkte weicher Konsistenz durch die Öffnungen in der Umfangswand der Trommel hindurch ins Innere der Trommel gedrückt, während die Produkte härterer Konsistenz an der äußeren Umfangsfläche der Trommel verbleiben. Die Produkte weicher Konsistenz können dann mittels einer innerhalb der Trommel fest angebrachten Förderschnecke aus dieser hinaus in einen Entnahmebehälter befördert werden. Davon getrennt können andererseits die Produkte härterer Konsistenz durch einen gegen die Umfangsfläche der Trommel laufenden Abstreifer von dieser entfernt und in einen zweiten Entnahmebehälter befördert werden.

Die Trommel besteht zum Zwecke der Lebensmittelverarbeitung aus korrosionsfreiem Edelstahl und hat je nach Ausgangsprodukt und Endprodukt in ihrer Umfangswand Bohrungen zwischen 1 und 10 mm Durchmesser. Bei bekannten Maschinen dieser Art ist die elastische Schicht in Form eines hochelastischen Gummibandes ausgebildet, das über eine Preßrolle, die gleichzeitig zum Antrieb dient, eine Spannrolle und weitere Umlenkrollen an die Trommel gedrückt wird.

Es hat sich herausgestellt, daß sich viele Produkte aufgrund ihrer Konsistenz oder äußeren Abmessungen sperren, in den Spalt zwischen Trommel und elastischer Schicht zu gelangen. So kommt es z. B. bei der Verarbeitung von Fleischprodukten leicht zu einer Brückenbildung im Zwischenraum zwischen Trommel und elastischer Schicht, die sich einem Hineinziehen des Fleisches zwischen Trommel und elastische Schicht widersetzt. Auch sperren sich z. B. verpackte Produkte mit nicht schmalen Abmessungen, wie z. B. in Kunststoff einer im wesentlichen rechteckigen Platte ausgebildet, wobei die Bewegungsrichtung des Schiebers in der Plattenebene liegt. Bei dieser Gestaltung ist die die Produkte befördernde Stirnseite des Schiebers relativ schmal, so daß die Produkte gezielt und möglichst weit zum Spalt zwischen Trommel und elastischer Schicht hin gedrückt werden können. Aufgrund der Plattenausbildung ist der Schieber insgesamt sehr stabil. Die Breite der Platte kann etwa der Breite der Trommel bzw. der elastischen Schicht entsprechen.

Der plattenförmige Schieber ist vorzugsweise an seinen Seitenrändern durch eine Führungsvorrichtung gehalten.

Die Führungsvorrichtung kann zwei Führungsschienen aufweisen, in die die beiden Seitenränder des Schiebers gleitbar eingreifen.

Wird die Trennmaschine zur Verarbeitung von Lebensmitteln eingesetzt, so müssen auch die Materialien des Schiebers und der Führungsvorrichtung hygienisch einwandfrei und nach dem Lebensmittelrecht zugelassen sein. Vorzugsweise werden als Materialien für den Schieber und die Führungsvorrichtung korrosionsfreier Edelstahl, Polyacetal-Harze oder hochmolekulares Polyäthylen verwendet.

Der Antriebsmechanismus für die periodische Bewegung des Schiebers weist vorzugsweise einen doppelt wirkenden Druckzylinder auf, wobei der darin angeordnete Kolben über eine Kolbenstange mit dem Schieber verbunden ist. Ein derartiger pneumatischer Antrieb ist aus Gewichtsund Kostengründen vorteilhaft.

Die Trennmaschine kann weiterhin eine Steuervorrichtung aufweisen, mit der die Taktzeit des Schiebers veränder bar ist. Eine solche Steuervorrichtung ermöglicht auf bekannte Weise, die Taktzeit des Schiebers in Abhängigkeit von der Art der zu verarbeitenden Produkte und der Verarbeitungsgeschwindigkeit einzustellen.

Darüber hinaus kann die Steuervorrichtung auch so beschaffen sein, daß mit ihr auch die Verharrungszeit des Schiebers in seinem tiefsten Punkt veränderbar ist. Besonders sperrige Produkte können auf diese Weise länger mit Hilfe des Schiebers in den Spalt zwischen Trommel und elastischer Schicht gedrückt werden, so daß sie dann sicher durch die Trommel und die elastische Schicht erfaßt werden.

Im nachfolgenden wird die Erfindung beispielsweise anhand des in der Zeichnung dargestellten Ausführungsbeispiels verdeutlicht. Es zeigen:

Fig. 1 eine Seitenansicht einer Trennmaschine, und

Fig. 2 eine Vorderansicht der in Fig. 1 dargestellten Trennmaschine.

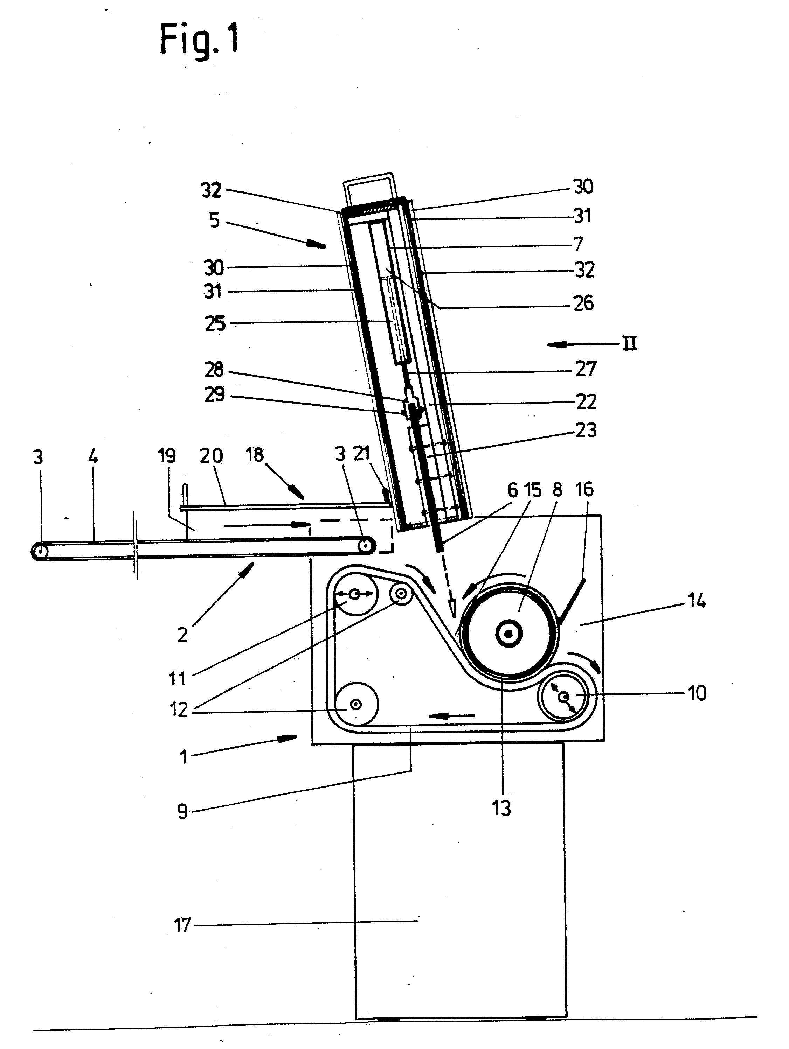

Wie aus Fig. 1 hervorgeht, besteht die Trennmaschine im wesentlichen aus einer Grundmaschine 1, in der Produkte weicher Konsistenz von Produkten härterer Konsistenz getrennt werden, einer Zuführungsvorrichtung 2, die aus einem um zwei Rollen 3 führenden Transportband 4 besteht, und einer Vorrichtung 5, die einen Schieber 6 und einen Antriebsmechanismus 7 zur periodischen Bewegung des Schiebers 6 aufweist.

Die Grundmaschine 1, die Zuführungsvorrichtung 2 und die Vorrichtung 5 sind in Fig. 1 zum Betrachter hin offen dargestellt.

Die an sich bekannte Grundmaschine 1 besteht, wie in Fig. 1 gezeigt ist, im wesentlichen aus einer Trommel 8 und einer elastischen Schicht 9 in Form eines endlosen Gummibandes, das über eine Preßrolle 10, die gleichzeitig Antriebsrolle ist, eine Spannrolle 11 und zwei Umlenkrollen 12 geführt ist und in einem Bereich 13 an der Trommel 8 unter Druck anliegt. Die Trommel 8, die Preßrolle 10, die Spannrolle 11 und die Umlenkrollen 12 sind drehbar zwischen zwei Seitenwänden 14, von denen nur die hintere in Fig. 1 dargestellt ist, angebracht. Die Trommel 8 und die Preßrolle 10 werden mit gleicher Umfangsgeschwindigkeit in entgegengesetzter Drehrichtung durch einen hinter der Seitenwand 14 angeordneten Antrieb angetrieben.

Wie aus Fig. 1 hervorgeht, bilden die Trommel 8 und die elastische Schicht 9 an der der Bewegungsrichtung entgegengesetzten Seite einen im Schnitt annähernd dreiecksförmigen Zwischenraum 15, in den die über das Transportband 4 der Zuführungsvorrichtung 2 beförderten Produkte gelangen. Ein gegen die Umfangsfläche der Trommel 8 laufender Abstreifer 16 entfernt die auf der Umfangsfläche der Trommel 8 verbleibenden Produkte härterer Konsistenz.

Die Grundmaschine 1 sowie die Zuführungsvorrichtung 2 sind auf einer Basis 17 befestigt, mit der die Trennmaschine auf den Boden eines Arbeitsraumes aufstellbar ist.

Die Zuführungsvorrichtung 2 weist längs einer Sicherheitsstrecke zum Zwischenraum 15 zwischen Trommel 8 und elastischer Schicht 9 hin eine Schutzvorrichtung 18 auf. Die Schutzvorrichtung 18 besteht aus Seitenwänden 19 mit einem darauf angeordneten verschiebbaren und abnehmbaren Deckel 20. Der Deckel 20 läßt sich in seinem geschlossenen Zustand arretieren und läßt über einen Sicher heitsschalter 21 nur in diesem Zustand den Betrieb der Maschine zu.

Oberhalb der Grundmaschine 1 ist die Vorrichtung 5 mit dem Schieber 6 und dem Antriebsmechanismus 7 für die periodische Bewegung des Schiebers 6 angeordnet.

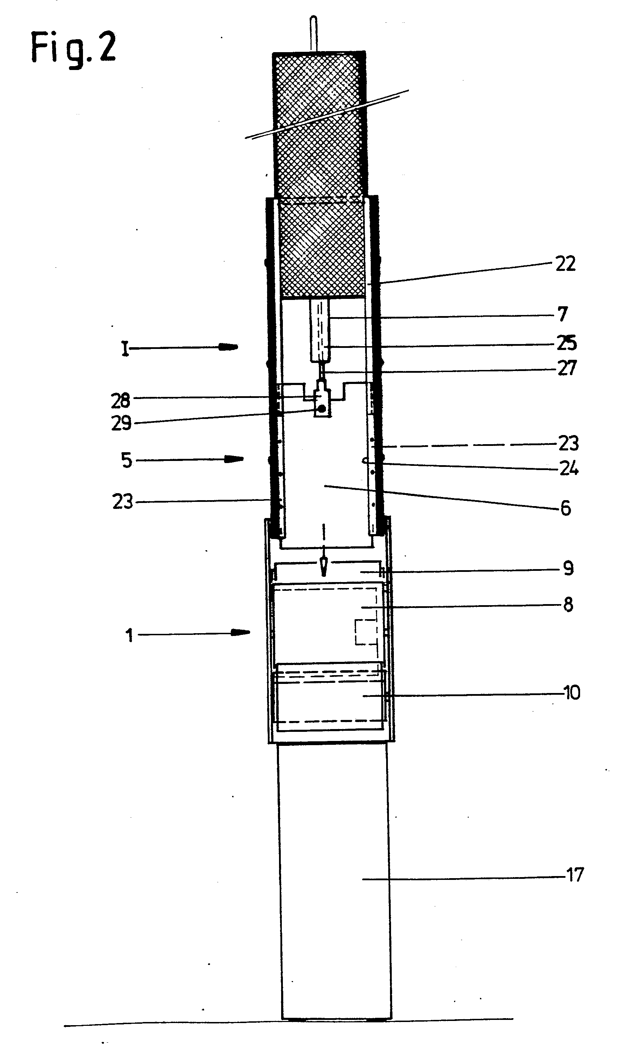

Die Vorrichtung 5 weist einen auf der Grundmaschine 1 angebrachten Rohrrahmen 22 auf. An dem Rohrrahmen 22 sind, wie insbesondere aus Fig. 2 hervorgeht, zwei Führungsschienen 23 angebracht, die gegenüberliegende Nuten 24 aufweisen. In diese Nuten greifen die seitlichen Ränder des plattenförmigen Schiebers 6 gleitbar ein.

An dem Rohrrahmen 22 ist weiterhin in dessen oberem Bereich der Antriebsmechanismus 7 angebracht. Der Antriebsmechanismus 7 weist einen pneumatischen Antrieb durch einen doppelt wirkenden Druckluftzylinder 25 auf. Der Kolben 26 des Druckluftzylinders 25 ist über eine Kolbenstange 27

mit dem Schieber 6 verbunden. Zur Verbindung dient ein Gabelkopf 28, in dem der mittlere obere Randbereich des Schiebers 6 mit einem Bolzen 29 befestigt ist.

Die Vorrichtung 5 mit dem Schieber 6 ist so auf der Grundmaschine 1 angeordnet, daß die Bewegungsrichtung des Schiebers 6 etwa mittig durch den annähernd dreieckförmigen Zwischenraum 15 zwischen Trommel 8 und elastischer Schicht 3 verläuft. Die untere Stirnseite des Schiebers 6 bewegt sich tief in den dreieckförmigen Zwischenraum 15 hinein und führt die zu verarbeitenden Produkte somit besonders effektiv zwischen die Trommel 8 und die elastische Schicht 9.

Die Vorrichtung 5 besitzt eine Verkleidung aus seitlichen Kunststoffwänden 30 und dazwischenliegenden Schutzblechen 31, die in gegenüberliegende Nuten 32 der Kunststoffwände 30 gleitend eingreifen. Die Schutzbleche 31 sind an ihrem oberen Ende U-förmig miteinander verbunden und können zu Reinigungszwecken gemeinsam nach oben verschoben werden. Im geschlossenen Zustand können die Schutzbleche 31 arretierbar sein und nur in diesem Zustand über den Sicherheitsschalter 21 den Betrieb der Maschine zulassen.

Mit Hilfe einer in der Zeichnung nicht dargestellten Steuervorrichtung können die Taktzeit des Schiebers 6 und die Verharrungszeit des Schiebers 6 an seinem tiefsten Punkt in Abhängigkeit von den zu verarbeitenden Produkten einstellbar sein.

**Ansprüche**

1. Trennmaschine zur Trennung von Produkten weicher und härterer Konsistenz, mit einer zylinderförmigen Trommel, die in ihrer Umfangswand Öffnungen zum Hindurchtreten des oder der Produkte weicher Konsistenz aufweist und die um ihre Achse drehbar antreibbar ist, mit einer seitlich und/oder unterhalb der Trommel angeordneten und unter Druck gegen die Trommel anliegenden elastischen Schicht, die simultan und in dem Bereich, in dem die Schicht an der Trommel anliegt, in gleicher Richtung mit dieser bewegbar ist und die mit der Trommel an der der Bewegungsrichtung entgegengesetzten Seite einen im Schnitt annähernd dreiecksförmigen Zwischenraum bildet, und mit einer Zuführungsvorrichtung zur Zuführung der Produkte in den Zwischenraum, **gekennzeichnet durch** einen Schieber (6), der periodisch in den Zwischenraum (15) hinein- und aus diesem herausbewegbar ist, und durch einen Antriebsmechanismus (7) zur periodischen Bewegung des Schiebers (6).

2. Trennmaschine nach Anspruch 1, **dadurch gekennzeichnet**, daß die Bewegungsrichtung des Schiebers (6) etwa mittig durch den im Schnitt annähernd dreiecksförmigen Zwischenraum (15) verläuft.

13. Trennmaschine nach Anspruch 1 oder 2, **dadurch gekennzeichnet**, daß der Schieber (6) in Form einer im wesentlichen rechteckigen Platte ausgebildet ist und die Bewegungsrichtung des Schiebers (6) in der Plattenebene liegt.

4. Trennmaschine nach Anspruch 3, **dadurch gekennzeichnet**, daß der Schieber (6) an seinen Seitenrändern durch eine Führungsvorrichtung gehalten ist.

5. Trennmaschine nach Anspruch 4, **dadurch gekennzeichnet**, daß die Führungseinrichtung zwei Führungsschienen (23) aufweist, in die die beiden Seitenränder des Schiebers (6) gleitbar eingreifen.

6. Trennmaschine nach Anspruch 4 oder 5, **dadurch gekennzeichnet**, daß der Schieber (6) und die Führungsvorrichtung aus korrosionsfreiem Edelstahl, Polyacetal-Harzen oder hochmolekularem Polyäthylen bestehen.

7. Trennmaschine nach einem der Ansprüche 1 bis 6, **dadurch gekennzeichnet**, daß der Antriebsmechanismus (7) einen doppelt wirkenden Druckzylinder (25) mit darin angeordnetem Kolben (26) aufweist und der Kolben (26) über eine Kolbenstange (27) mit dem Schieber (6) verbunden ist.

8. Trennmaschine nach einem der Ansprüche 1 bis 7, **gekennzeichnet durch** eine Steuervorrichtung, mit der die Taktzeit des Schiebers (6) einstellbar und veränderbar ist.

9. Trennmaschine nach Anspruch 8, **dadurch gekennzeichnet**, daß mit der Steuervorrichtung auch die Verharrungszeit des Schiebers (6) an seinem tiefsten Punkt einstellbar und veränderbar ist.

# Fig.1

modernpack Bernards-Hoppe GmbH

# Fig.2

I

28

29

5

23

1

22

7

25

27

23

24

6

9

8

10

17